# EUROPEAN PATENT SPECIFICATION

(11) **EP 2 162 698 B1**
(45) Date of publication and mention of the grant of the patent: **13.02.2013**
(21) Application number: 08775788.6
(22) Date of filing: 30.06.2008
(51) Int. Cl.: G01B 7/14, G01H 1/00

(54) **EDDY CURRENT SENSOR**
WIRBELSTROMSENSOR
CAPTEURS À COURANTS DE FOUCAULT

(30) Priority: 04.07.2007 GB 0712926
(43) Date of publication of application: 17.03.2010
(73) Proprietor: QinetiQ Limited, Farnborough Hampshire GU14 0LX (GB)
(72) Inventor: CHANA, Kamaljit, Singh, Farnborough Hampshire GU14 0LX (GB)
(74) Representative: Clarke, Alan
(86) International application number: PCT/GB2008/002233
(87) International publication number: WO 2009/004319

(56) References cited:
- US-A- 4 967 153
- US-A- 5 015 949
- US-A1- 2005 088 171
- US-B1- 6 927 567
- US-B1- 7 023 205

## Description

The present invention relates to eddy current sensors and the use of such sensors as dynamic proximity sensors for detecting the passage of objects. The invention is particularly concerned with the use of such sensors for monitoring of blade tip timing and blade tip clearance in turbomachinery and even more particularly in relation to the blades of fans, compressors and turbines in gas turbine engines. In principle, however, the invention is applicable to the monitoring of a wide variety of moving parts such as rotors, bearings and gears, in machines of many kinds and whether rotary or linear in motion, including for example the teeth of a sliding rack in a vehicle steering mechanism.

The blades of in-service gas turbine engines require frequent inspections between operations as monitoring them dynamically whilst in operation is difficult. Monitoring the blades whilst in operation could, however, allow them to be operated less conservatively, closer to their actual mechanical limits, and therefore at a higher level of efficiency. Such monitoring could also capture any events that might lead to failure of the blades and therefore also improve safety. More generally such monitoring would allow improvements to prognostics and life usage assessment and thus potentially reduce whole life costs and increase engine availability through better planned maintenance.

Deterioration of gas turbine rotor blades due to foreign object damage (FOD), erosion by e.g. sand or water, low cycle fatigue (LCF) and high cycle fatigue (HCF) all limit blade life. Currently this has to be monitored through frequent inspections during engine downtime. One method for addressing at least part of this monitoring, however, is through the use of tip timing. This method measures the arrival time of individual blade tips at a chosen position or positions around the rotor casing and uses variations in the arrival times to calculate the mode and amplitude of blade vibrations, from which certain inferences can be drawn concerning the physical condition ("health") of individual blades. This method may also be used to monitor the disc or drum to which the blades are attached for cracks or other conditions that may be revealed by the dynamic behaviour of the blades. Tip timing instrumentation has been used in both fan and compressor rig tests during development programmes. This instrumentation uses optical probes mounted in the casing assembly which shine narrow laser light beams onto the passing blade tips. As each blade tip enters the path of a light beam, light is reflected back to an associated photo detector and the time of arrival of the blade tip is taken accordingly. However, there are problems with this system because the optics are vulnerable to contamination with dirt and it will not work if either of the light transmitter or receiver are obscured. In practice therefore these systems require frequent cleaning, making them unsuitable for in-service use. Even if the optics themselves can be kept clean, problems can still arise with reception of a suitable light signal if the blade tips become contaminated and fail to reflect properly. As an unobstructed optical path is required between the components, it also means that they must be mounted on the inside surface of the rotor casing (potentially exposing them to damage and/or interfering with the gas path) or that suitable apertures must be drilled through the casing to pass the probes (potentially compromising the structure and/or its gas tightness). Furthermore, these systems have a limited operational temperature range and are unsuitable for use in the higher temperature regions of an engine (including for turbine blade tip timing).

Another class of sensor that has been proposed for turbomachinery blade tip timing is the eddy current sensor. This type of sensor is based on the principle of creating a magnetic field in a region through which the target object(s) are to pass. Provided that the target object(s) are of an electrically conductive material - which is generally the case for gas turbine engine fan, compressor and turbine blades - eddy currents are induced in the surface of the respective object as it encounters the magnetic field. These eddy currents in turn generate a secondary magnetic field which is detected by means of a coil in the sensor and can be used for determining a time of arrival of the object similarly to the reflection in the optical system described above for blade tip timing. Eddy current sensors do not have the same requirements for frequent cleaning as optical probes or suffer from the same operational temperature limitations as optical probes when used for gas turbine rotor tip timing. In addition, they can if desired be mounted outside the rotor casing, or at least between the rotor casing and the conventional sacrificial rubbing strips which are provided around the inside of the casing adjacent to the blade tips, as the magnetic fields which they generate are capable of penetrating through such structures provided that the latter are not predominantly composed of ferromagnetic materials. Furthermore, since the output of an eddy current sensor depends in part upon the distance between the passing target object and the sensing coil, this type of sensor has the ability to provide information on blade tip clearances as well as tip timing.

While eddy current sensors of various forms are known - including "passive" types where the primary magnetic field is produced by a permanent magnet and its variations caused by eddy currents in passing objects are sensed by an associated coil, and dc and ac-driven "active" types where the primary magnetic field is produced by one or more coils and the fields produced by resultant eddy currents in passing objects are sensed by the same or different coil(s) - the present invention is more particularly concerned with an ac type where the same coil is used for both generating the primary magnetic field and sensing the secondary magnetic field as this type can be both structurally compact and light in weight and provide a sufficiently high frequency response for use with fast moving rotor blades or the like. Available sensors of this type, however, where the coils are wound on formers of conventional circular section, have been found to provide poor resolution as compared to the above-described optical system. That is to say the response of the optical probe to a typical blade tip entering and leaving the region defined by its narrow laser light beam is near-instantaneous, as the optical beam diameter (typically 1-3mm) is no greater than the thickness of the blade tip (typically 3-5mm), and the optical system typically outputs a signal of almost square wave form in response to each passage of a blade, the leading edges of which accurately establish respective arrival times. To achieve good resolution with an eddy current sensor similarly requires a narrowly-defined magnetic flux region. The magnetic flux region is, however, larger than the coil diameter. Furthermore, the coil size also determines the range of the sensor as the extent to which the magnetic flux extends axially away from the coil is proportional to the diameter of the coil. Typical in-service turbomachinery fan blades have a gap of around 5-7mm between the casing and the blade tip. Eddy current sensors have a range of approximately half the coil diameter. This means that available sensors of this type must have coils in the region of 10-14mm in diameter in order to be able to detect blades passing, which gives poor resolution. That is to say the magnetic flux extends across a wide region in comparison to the tip thickness of a blade and the consequent output of the eddy current sensor is a signal with substantially slower rising and falling edges and extending over a substantially longer time period than that of the optical system, which makes it more difficult to establish respective arrival times with the same degree of accuracy.

US2005/0088171 discloses an "active" type eddy current sensor for turbine blade proximity sensing, comprising a coil wound on a grooved core of circular cross-section.

US7023205 discloses a "passive" type eddy current sensor capable of sensing through a conductive barrier such as a gas turbine engine casing, comprising a coil wound around a permanent magnet of rectangular cross-section and which is arranged in use with its longitudinal axis parallel to the casing.

US6927567 discloses a "passive" type eddy current sensor for turbomachinery blade sensing, comprising a permanent magnet of circular cross-section and a separate coil wound on a ferromagnetic core of circular cross-section disposed parallel to the magnet.

In one aspect the present invention seeks to address the above-described disadvantage of available eddy current sensors and in this aspect resides in a combination of one or more electrically conductive objects of elongate section arranged to pass through a region and apparatus arranged to monitor the passage of such objects through said region comprising an eddy current sensor comprising a common coil for use in both generating a magnetic field in said region and detecting the effect of eddy currents generated by said field in such object(s) passing through said region, characterised in accordance with claim 1.

In this respect it has been found that if the coil of such a sensor is wound on a former of elongate section, say rectangular or elliptical, the range of the device is equivalent to that of one with a circular coil of the same number of windings and a diameter equal to the longer cross-sectional dimension of the elongate coil, but its resolution is substantially improved as compared to the circular coil in terms of the detection of objects which are themselves of elongate section (such as the tips of turbomachinery blades) passing through the respective region, when the direction of the shorter cross-sectional dimension of the elongate coil is generally aligned with the shorter cross-sectional dimensions of the objects in the course of their passage. Preferably the shorter cross-sectional dimension of the sensor coil is not substantially greater than, and even more preferably is less than, the shorter cross-sectional dimension of the or each object. In this respect "object" means more properly that portion of an object which passes through the region defined by the field generated by the coil.

The invention also resides in a method of monitoring the passage through a region of one or more electrically conductive objects of elongate section which comprises operating an eddy current sensor comprising a common coil to both generate a magnetic field in said region and detect the effect of eddy currents generated by said field in such object(s) passing through said region, characterised in that said coil is elongate in cross-section in a plane perpendicular to the longitudinal axis of the coil and arranged with the longitudinal axis of the coil directed towards said region and with the direction of the shorter cross-sectional dimension of said coil generally aligned with the shorter cross-sectional dimension of the respective object(s) in their passage through said region.

An exemplary method is concerned with another problem associated with the use of eddy current sensors for turbomachinery blade tip timing. That is to say it has been stated above that an advantage of eddy current sensors over the conventional optical system is that they can provide information on blade tip clearances as well as tip timing. In general, the lengths of the blades fitted to a turbomachine rotor tend to differ slightly from blade to blade, and since the eddy current sensor signal is dependent on the distance between the blade tip and the coil the resultant signal amplitude tends to differ from blade to blade. While this is indeed useful for determining blade tip clearance variations, it can lead to inaccuracies in the extraction of arrival time information. As will be more particularly explained hereinafter, an exemplary method of processing a signal wave form derived from the eddy current sensor comprises a plurality of successive waves comprising peaks separated by troughs, the method comprising, for respective waves, the steps of taking the respective peak amplitude and an associated trough amplitude, calculating the amplitude at a specified fraction between said peak and trough amplitudes, and determining the temporal position on the rising or falling edge of the respective wave that corresponds to said fractional amplitude.

The invention will now be more particularly described, by way of example, with reference to the accompanying drawings, in which:
Figure 1 is an axial section through one preferred embodiment of an eddy current sensor for use in accordance with the invention, being a section on the line I-I of Figure 2;
Figure 2 is an end view of the sensor of Figure 1;
Figure 3 is a side view of the sensor of Figures 1 and 2, taken at right angles to the view in Figure 1, with the coil omitted for ease of illustration;
Figure 4 is an end view of a typical fan blade tip and showing the optimum alignment of the sensor of Figures 1 to 3 with respect to the blade angle and trajectory when used for tip timing;
Figure 5 illustrates the extraction of tip timing information from a wave form in accordance with a background example not part of the invention; and
Figure 6 illustrates schematically a system for deriving tip timing and tip clearance data in accordance with the invention.

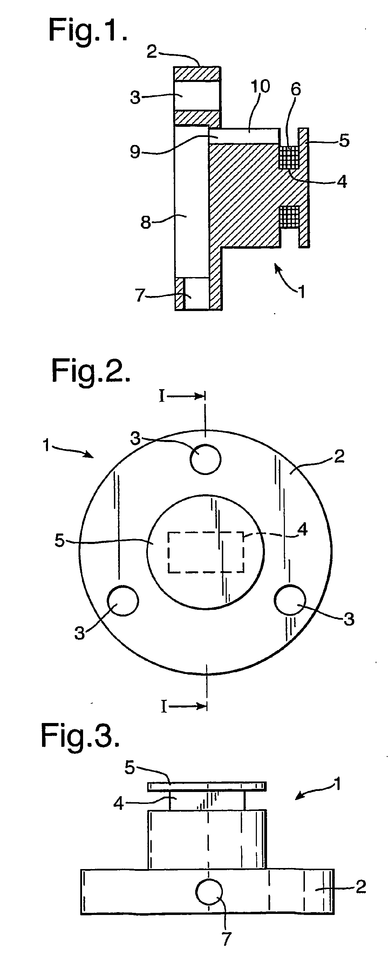

Referring to Figures 1-3, the illustrated sensor has a body 1 of moulded plastic or ceramic, depending on the required operating temperature range of the device. This body has a circular flange portion 2 at one end with mounting holes 3 to receive bolts or the like for fixing the device e.g. to the casing of a turbomachine surrounding a ring of rotor blades. The body 1 extends forwards from the flange portion 2 and terminates in a bobbin portion comprising a former 4 disposed between the main body portion and an end plate 5. As seen particularly in phantom in Figure 2, and by comparing the dimensions of the former as shown in Figures 1 and 3, the former 4 is of rectangular cross-section with the dimensions of the longer and shorter sides in this example being approximately in the ratio of 2:1. Around this former is wound a coil 6, seen schematically only in Figure 1, and therefore being also of rectangular section in a plane perpendicular to its longitudinal axis. The coil is typically wound from copper wire with a resin coating or from nickel wire with an oxide or ceramic coating depending on the required operating temperature range of the device. The core of the coil is provided by the plastic or ceramic material of the body 1 and hence comprises no ferromagnetic core in this embodiment. Holes and slots 7-10 in the body 1 provide access for electrical leads (not shown) to connect the coil 6 to a remote power supply and processing electronics.

In use of this sensor, e.g. for fan, compressor and/or turbine blade tip timing and/or tip clearance monitoring in a gas turbine engine, the coil 6 is driven by an alternating current to generate an alternating magnetic field around the coil and extending into a region forwards of the end plate 5 as will be understood by those skilled in the art. For use in turbomachinery blade tip timing where the blade passing frequency is typically in the order of 10KHz, the coil will be driven at a frequency in the order of 1MHz. As the respective electrically conductive blade tips pass through the region into which this magnetic field extends, eddy currents are induced in the surface of each tip. These eddy currents in turn generate a secondary magnetic field inducing a secondary voltage in the sensor coil 6. This causes the coil's inductive reactance to change, the interaction between the coil and blade tip in this respect being akin to that between the windings of a loosely coupled transformer. The coil 6 is driven at constant current and its voltage is monitored to provide an output signal (when rectified) comprising a series of waves, each representing the passage past the sensor of a respective blade tip.

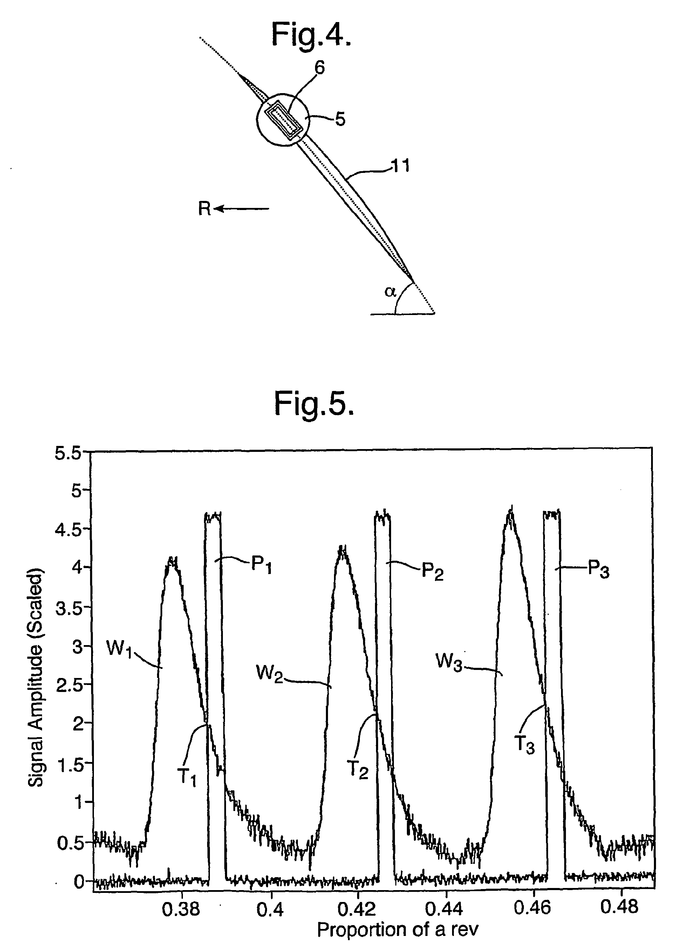

To maximise the resolution of the illustrated sensor in turbomachinery tip timing, it is mounted so that the shorter cross-sectional dimension of the coil 6 on former 4 is aligned with the thickness direction of the portion of each blade tip which passes through its magnetic field, or in other words aligned normal to the camber line of the blade tip at the respective chordwise position. This is illustrated schematically in Figure 4 where the tip of a fan blade 11 is seen end-on at a typical angle of incidence *α* and with its direction of travel (rotation) past the sensor indicated by the arrow R. The optimum alignment of the coil 6 (shown with end plate 5) of the sensor with respect to the camber line (dotted) of the blade tip as the tip passes the sensor is seen by superimposition in this Figure.

Turning now to Figure 5, this shows a typical processed output signal waveform from an eddy current sensor of the kind described above with reference to Figures 1 to 3 when used for blade tip timing as described above and with reference to Figure 4, being a small extract from a trace obtained from trials of an experimental sensor, fitted to the fan casing, during operation of a production turbofan engine. As will be seen, it comprises a succession of waves (only three of which W₁ - W₃ appear in the Figure), each one of which represents the passage past the sensor of an individual fan blade tip. The peak amplitudes of the waves are seen to vary, being an indication of the variations in tip clearance from blade to blade (and in a complete trace covering many revolutions of the fan, indicating variations in tip clearances of individual blades from revolution to revolution, for example due to vibrational effects and/or changes in temperature of the blades). If operating over an extensive temperature range there may also be variations in these peak amplitudes due to changes in the resistance of the coil 6 with temperature. In these circumstances the temperature of the coil can be monitored e.g. with a thermocouple and an appropriate correction applied. In order to extract accurate tip *timing* information from this kind of waveform, however, it is necessary to select a consistent position on each wave to act as the "trigger" point to define a time of arrival for subsequent calculations of vibrational modes etc.

If, say, the peak amplitude of each wave is taken as the respective "trigger" point, this can lead to certain inaccuracies. That is to say the presence of high-frequency noise on the waveform means that the temporal position of the point of actual highest amplitude on any particular wave can occur across a time range either side of the "true" peak, and because the "true" amplitude is changing only slowly at the peak region, this range can be quite significant in terms of the opportunity it provides for selecting a spurious temporal position for the "true" peak. If on the other hand a fixed amplitude value is chosen to define the "trigger" point for each wave, this can also lead to inaccuracy. This is because both the peak amplitudes and overall widths of the waves vary from blade to blade, and from revolution to revolution for individual blades, so that the temporal positions at which the fixed amplitude occurs for different waves will occur at different relative positions on the overall wave shape.

The solution to this problem that has been adopted in the present invention is as follows. For each wave both the actual peak amplitude and minimum amplitude of the preceding trough are taken, irrespective of the actual temporal positions at which they occur. The amplitude at a predetermined fraction (50% in the illustrated example) between the trough and peak is then calculated, and the temporal position at which this amplitude occurs on the wave is determined. These respective "trigger" positions are shown at T₁ - T₃ where they occur on the falling edges of the waves W₁ - W₃ in Figure 5. They could alternatively be applied to the rising edges of the respective waves, so long as the same edge is chosen consistently for each wave - the rise and fall of each wave are typically asymmetrical to the peak due to the asymmetry of blade tip geometry.

The effect of this method for defining "trigger" points is to achieve greater consistency in their temporal positioning relative to the overall shape of the respective waves. Although there may be some error in the measured peak and trough amplitudes as compared to the "true" amplitudes due to the presence of noise, the effect of such errors is minimised by selecting in a manner adapted to each wave a respective "trigger" point amplitude which occurs on a rapidly falling (or rising) edge region of the wave, where any percentage error in amplitude along the edge is reflected by a much smaller percentage error in temporal position.

The necessary processing to define the "trigger" points for each wave as described above can readily be achieved in real time with analogue electronics. In Figure 5, it is also shown that a square waveform comprising pulses P₁ - P₃ etc can be generated and fitted to the "trigger" points, which can provide a more convenient form for further processing of tip timing information, for example using existing equipment/software developed for processing the square-wave signals from the optical sensing system described in the introduction to this specification.

An alternative method for defining "trigger" points for blade tip timing from such waveforms would be to digitise the raw signal at high bandwidths, filter the data, curve fit, and find the peaks, which can then be used to determine the arrival times of the blades. The sampling frequency for the raw signal has to be sufficiently high to capture the raw data (at least of kHz order) and the data has to be stored for it to be processed. The processor frequency has to be sufficiently high if near real-time blade health monitoring information is required, and the required storage capacity when monitoring for many hours becomes significant. The signal processing method described above, on the other hand, can locate the respective troughs/peaks and determine corresponding "trigger" points using real-time analogue electronics, with no digitisation or extensive data storage required. The "trigger" points from each passing blade are the only values which need to be stored, making the file sizes much smaller and allowing many days worth of data to be recorded without significant storage capacity requirements.

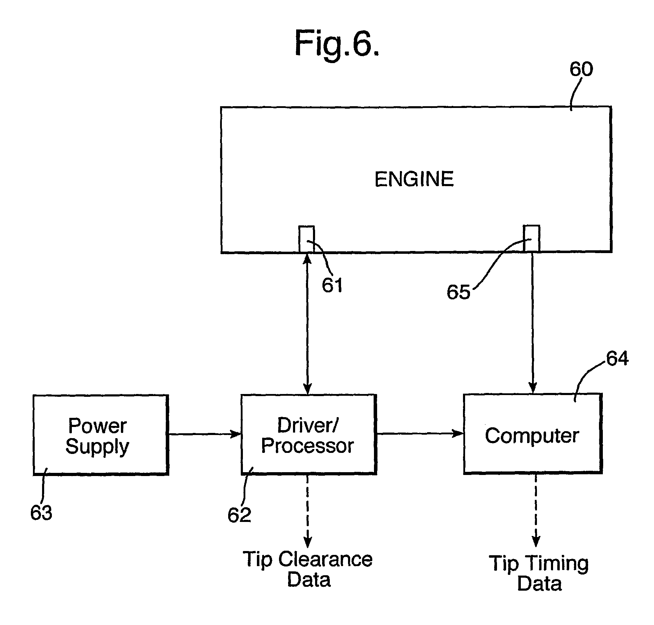

Figure 6 illustrates schematically a system for deriving tip timing and tip clearance data from a gas turbine engine 60 in accordance with the invention, where 61 denotes an eddy current sensor of the kind described above with reference to Figures 1-3, set up as described with reference to Figure 4, and 62 denotes the sensor driver and triggering/signal processing electronics for deriving the waveforms and trigger points as described above with reference to Figure 5, together with an associated power supply 63. Tip clearance data can be output directly from the unit 62 while the blade time of arrival pulse signals from that unit are fed to a computer 64 for processing and analysing the tip timing data in conjunction with signals from a separate conventional device 65 which senses each complete revolution of the respective rotor shaft.

## Claims

1. A combination of one or more electrically conductive objects (11) of elongate section arranged to pass through a region and apparatus arranged to monitor the passage of such objects (11) through said region comprising an eddy current sensor (61) comprising a common coil (6) for use in both generating a magnetic field in said region and detecting the effect of eddy currents generated by said field in such objects (11) passing through said region, **characterised in that** said coil (6) is elongate in cross-section in a plane perpendicular to the longitudinal axis of the coil (6) and arranged with the longitudinal axis of the coil (6) directed towards said region and with the direction of the shorter cross-sectional dimension of said coil (6) generally aligned with the shorter cross-sectional dimension of the respective objects (11) in their passage through said region.

2. A combination according to claim 1 wherein the shorter cross-sectional dimension of said coil (6) is not substantially greater than the shorter cross-sectional dimension of the or each object (11).

3. A combination according to claim 2 wherein the shorter cross-sectional dimension of said coil (6) is less than the shorter cross-sectional dimension of the or each object (11).

4. A combination according to any one of claims 1 to 3 wherein said coil (6) is of generally rectangular or elliptical section.

5. A combination according to any one of claims 1 to 4 further comprising means (62) for applying an alternating current to said coil (6) and means (62) for detecting changes in the inductive reactance of said coil (6) due to the generation of eddy currents in passing objects.

6. A combination according to any preceding claim wherein said objects are the tips of blades (11) in a turbomachine (60).

7. A method of monitoring the passage through a region of one or more electrically conductive objects (11) of elongate section which comprises operating an eddy current sensor (61) comprising a common coil (6) to both generate a magnetic field in said region and detect the effect of eddy currents generated by said field in such objects (11) passing through said region, **characterised in that** said coil (6) is elongate in cross-section in a plane perpendicular to the longitudinal axis of the coil (6) and arranged with the longitudinal axis if the coil (6) directed towards said region and with the direction of the shorter cross-sectional dimension of said coil (6) generally aligned with the shorter cross-sectional dimension of the respective objects (11) in their passage through said region.

8. A method according to claim 7 wherein the shorter cross-sectional dimension of said coil (6) is not substantially greater than the shorter cross-sectional dimension of the or each object (11).

9. A method according to claim 8 wherein the shorter cross-sectional dimension of said coil (6) is less than the shorter cross-sectional dimension of the or each object (11).

10. A method according to any one of claims 7 to 9 wherein said coil (6) is of generally rectangular or elliptical section.

11. A method according to any one of claims 7 to 10 comprising applying an alternating current to said coil (6) and detecting changes in the inductive reactance of said coil (6) due to the generation of eddy currents in passing objects.

12. A method according to any one of claims 7 to 11 used in monitoring turbomachinery blade tip timing and/or clearance.

13. A method according to any one of claims 7 to 12 wherein a signal wave form comprising a plurality of successive waves (W₁,W₂,W₃) comprising peaks separated by troughs is derived from said eddy current sensor (61) and is processed by a method comprising, for respective waves (W₁,W₂,W₃), the steps of taking the respective peak amplitude and an associated trough amplitude, calculating the amplitude at a specified fraction between said peak and trough amplitudes, and determining the temporal position (T₁,T₂,T₃) on the rising or falling edge of the respective wave (W₁,W₂,W₃) that corresponds to said fractional amplitude.

14. A method according to claim 13 further comprising the step of fitting a square wave form (P₁,P₂,P₃) to said temporal positions (T₁,T₂,T₃).

## Patentansprüche

1. Kombination von einem oder mehreren elektrisch leitfähigen Objekten (11) länglichen Querschnitts, die zum Passieren eines Bereichs ausgebildet sind, und einer Vorrichtung, die zum Überwachen des Passierens solcher Objekte (11) durch den Bereich ausgebildet ist und einen Wirbelstromsensor (61) aufweist, der eine gemeinsame Spule (6) zur Verwendung für sowohl das Erzeugen eines magnetischen Feldes in dem Bereich als auch das Erfassen der Auswirkung von Wirbelströmen aufweist, die durch das Feld in solchen Objekten (11) beim Passieren des Bereichs erzeugt werden, **dadurch gekennzeichnet, dass** die Spule (6) in einer zur Längsachse der Spule (6) senkrechten Ebene einen länglichen Querschnitt aufweist und so angeordnet ist, dass die Längsachse der Spule (6) in Richtung des Bereichs weist und die Richtung der kürzeren Querschnittsabmessung der Spule (6) generell an der kürzeren Querschnittsabmessung der jeweiligen Objekte (11) bei deren Passage durch den Bereich ausgerichtet ist.

2. Kombination nach Anspruch 1, worin die kürzere Querschnittsabmessung der Spule (6) nicht wesentlich größer als die kürzere Querschnittsabmessung des oder eines jeden Objekts (11) ist.

3. Kombination nach Anspruch 2, worin die kürzere Querschnittsabmessung der Spule (6) kleiner als die kürzere Querschnittsabmessung des oder eines jeden Objekts (11) ist.

4. Kombination nach einem der Ansprüche 1 bis 3, worin die Spule (6) einen generell rechteckförmigen oder ellipsenförmigen Querschnitt aufweist.

5. Kombination nach einem der Ansprüche 1 bis 4, die ferner eine Einrichtung (62) zum Anlegen eines Wechselstroms an die Spule (6) und eine Einrichtung (62) zum Erfassen von Veränderungen des induktiven Blindwiderstandes der Spule (6) infolge der Erzeugung von Wirbelströmen in passierenden Objekten aufweist.

6. Kombination nach einem der vorhergehenden Ansprüche, worin die Objekte Schaufelspitzen (11) einer Turbomaschine (60) sind.

7. Verfahren zum Überwachen des Passierens von einem oder von mehreren elektrisch leitfähigen Objekten (11) länglichen Querschnitts durch einen Bereich, das ein Betreiben eines Wirbelstromsensors (61) umfasst, der eine gemeinsame Spule (6) für sowohl zum Erzeugen eines magnetischen Feldes in dem Bereich als auch zum Erfassen der Auswirkung von Wirbelströmen aufweist, die durch das Feld in solchen den Bereich passierenden Objekten (11) erzeugt werden, **dadurch gekennzeichnet, dass** die Spule (6) in einer zur Längsachse der Spule (6) senkrechten Ebene einen länglichen Querschnitt aufweist und so angeordnet ist, dass die Längsachse der Spule (6) in Richtung des Bereichs weist und die Richtung der kürzeren Querschnittsabmessung der Spule (6) generell an der kürzeren Querschnittsabmessung der jeweiligen Objekte (11) bei deren Passage durch den Bereich ausgerichtet ist.

8. Verfahren nach Anspruch 7, worin die kürzere Querschnittsabmessung der Spule (6) nicht wesentlich größer als die kürzere Querschnittsabmessung des oder eines jeden Objekts (11) ist.

9. Verfahren nach Anspruch 8, worin die kürzere Querschnittsabmessung der Spule (6) kleiner als die kürzere Querschnittsabmessung des oder eines jeden Objekts (11) ist.

10. Verfahren nach einem der Ansprüche 7 bis 9, worin die Spule (6) einen generell rechteckförmigen oder ellipsenförmigen Querschnitt aufweist.

11. Verfahren nach einem der Ansprüche 7 bis 10, das eine Anlegen eines Wechselstroms and die Spule (6) und ein Erfassen von Veränderungen des induktiven Blindwiderstandes der Spule (6) infolge der Erzeugung von Wirbelströmen in passierenden Objekten umfasst.

12. Verfahren nach einem der Ansprüche 7 bis 11 zur Verwendung bei der Überwachung des Schaufelspitzentaktes und/oder - abstandes einer Turbomaschine.

13. Verfahren nach einem der Ansprüche 7 bis 12, worin aus dem Wirbelstromsensor (61) eine mehrere aufeinanderfolgende Verläufe (W₁, W₂, W₃) umfassende Signalverlaufsform, die durch Täler getrennte Spitzen aufweist, abgeleitet und mit einem Verfahren aufbereitet wird, das für die jeweiligen Verläufe (W₁, W₂, W₃) Schritte zum Aufnehmen der jeweiligen Spitzenamplitude und einer zugehörigen Talamplitude, Berechnen der Amplitude an einem festgelegten Teil zwischen Spitzen- und Talamplitude und Bestimmen der der Teilamplitude entsprechenden zeitlichen Lage (T₁, T₂, T₃) an der ansteigenden oder abfallenden Flanke des jeweiligen Verlaufs (W₁, W₂, W₃) aufweist.

14. Verfahren nach Anspruch 13, das ferner einen Schritt zum Anpassen einer Rechteckverlaufsform (P₁, P₂, P₃) an die zeitlichen Lagen (T₁, T₂, T₃) umfasst.

## Revendications

1. Combinaison d'un ou plusieurs objets électriquement conducteurs (11) de section allongée agencés pour passer à travers une région et d'un appareil agencé pour surveiller le passage de tels objets (11) à travers ladite région comprenant un capteur à courants de Foucault (61) comprenant une bobine (6) commune pour une utilisation à la fois dans la génération d'un champ magnétique dans ladite région et la détection de l'effet de courants de Foucault générés par ledit champ dans de tels objets (11) passant à travers ladite région, **caractérisée en ce que** ladite bobine (6) est de section transversale allongée dans un plan perpendiculaire à l'axe longitudinal de la bobine (6) et agencée avec l'axe longitudinal de la bobine (6) dirigé vers ladite région et avec la direction de la dimension de section transversale plus courte de ladite bobine (6) généralement alignée avec la dimension de section transversale plus courte des objets (11) respectifs lors de leur passage à travers ladite région.

2. Combinaison selon la revendication 1, dans laquelle la dimension de section transversale plus courte de ladite bobine (6) n'est pas sensiblement supérieure à la dimension de section transversale plus courte de l'objet ou de chaque objet (11).

3. Combinaison selon la revendication 2, dans laquelle la dimension de section transversale plus courte de ladite bobine (6) est inférieure à la dimension de section transversale plus courte de l'objet ou de chaque objet (11).

4. Combinaison selon l'une quelconque des revendications 1 à 3, dans laquelle ladite bobine (6) est généralement de section rectangulaire ou elliptique.

5. Combinaison selon l'une quelconque des revendications 1 à 4, comprenant en outre un moyen (62) permettant d'appliquer un courant alternatif à ladite bobine (6) et un moyen (62) permettant de détecter des changements de réactance inductive de ladite bobine (6) provoqués par la génération de courants de Foucault lors du passage d'objets.

6. Combinaison selon l'une quelconque des revendications précédentes, dans laquelle lesdits objets sont les extrémités d'aubes (11) dans une turbomachine (60).

7. Procédé de surveillance du passage à travers une région d'un ou plusieurs objets électriquement conducteurs (11) de section allongée qui comprend l'actionnement d'un capteur à courants de Foucault (61) comprenant une bobine (6) commune pour à la fois générer un champ magnétique dans ladite région et détecter l'effet de courants de Foucault générés par ledit champ dans de tels objets (11) passant à travers ladite région, **caractérisé en ce que** ladite bobine (6) est de section transversale allongée dans un plan perpendiculaire à l'axe longitudinal de la bobine (6) et agencée avec l'axe longitudinal de la bobine (6) dirigé vers ladite région et avec la direction de la dimension de section transversale plus courte de ladite bobine (6) généralement alignée avec la dimension de la section transversale plus courte des objets (11) respectifs lors de leur passage à travers ladite région.

8. Procédé selon la revendication 7, dans lequel la dimension de section transversale plus courte de ladite bobine (6) n'est pas sensiblement supérieure à la dimension de section transversale plus courte de l'objet ou de chaque objet (11).

9. Procédé selon la revendication 8, dans lequel la dimension de section transversale plus courte de ladite bobine (6) est inférieure à la dimension de section transversale plus courte de l'objet ou de chaque objet (11).

10. Procédé selon l'une quelconque des revendications 7 à 9, dans lequel ladite bobine (6) est généralement de section rectangulaire ou elliptique.

11. Procédé selon l'une quelconque des revendications 7 à 10, comprenant l'application d'un courant alternatif à ladite bobine (6) et la détection de changements de réactance inductive de ladite bobine (6) provoqués par la génération de courants de Foucault lors du passage d'objets.

12. Procédé selon l'une quelconque des revendications 7 à 11, utilisé dans la surveillance de la synchronisation et/ou du jeu d'extrémités d'aubes d'une turbomachine (60).

13. Procédé selon l'une quelconque des revendications 7 à 12, dans lequel une forme d'onde de signal comprenant une pluralité d'ondes (W₁, W₂, W₃) successives comprenant des crêtes séparées par des creux est dérivée dudit capteur à courants de Foucault (61) et est traitée par un procédé comprenant, pour des ondes (W₁, W₂, W₃) respectives, les étapes de prise de l'amplitude de crête respective et d'une amplitude de creux associée, de calcul de l'amplitude à une fraction spécifiée entre lesdites amplitudes de crête et de creux, et de détermination de la position temporelle (T₁, T₂, T₃) sur le flanc montant ou descendant de l'onde (W₁, W₂, W₃) respective qui correspond à ladite amplitude fractionnaire.

14. Procédé selon la revendication 13, comprenant en outre l'étape d'ajustement d'une forme d'onde carrée (P₁, P₂, P₃) auxdites positions temporelles (T₁, T₂, T₃).
